# EUROPÄISCHE PATENTSCHRIFT

(11) **EP 1 532 221 B1**
(45) Veröffentlichungstag und Bekanntmachung des Hinweises auf die Patenterteilung: **19.09.2007**
(21) Anmeldenummer: 03797230.4
(22) Anmeldetag: 07.08.2003
(51) Int. Cl.: C09J 175/06, C08G 18/42, C08G 18/10

(54) **REAKTIVE POLYURETHAN-HOTMELTS MIT GROSSEM HAFTKLEBEBEREICH**
REACTIVE POLYURETHANE HOT MELT ADHESIVES WITH A WIDE ADHESION RANGE
ADHESIFS THERMOFUSIBLES POLYURETHANNES REACTIFS A LARGE PLAGE D'ADHESION

(30) Priorität: 20.08.2002 DE 10238005
(43) Veröffentlichungstag der Anmeldung: 25.05.2005
(73) Patentinhaber: Bayer MaterialScience AG, 51368 Leverkusen (DE)
(72) Erfinder: WINTERMANTEL, Matthias, 51061 Köln (DE); PERREY, Hermann, 47829 Krefeld (DE); WAMPRECHT, Christian, 41472 Neuss (DE); MECKEL, Walter, 40627 Düsseldorf (DE); RAMTHUN, Jürgen, 51469 Bergisch Gladbach (DE)
(86) Internationale Anmeldenummer: PCT/EP2003/008761
(87) Internationale Veröffentlichungsnummer: WO 2004/026986

(56) Entgegenhaltungen:
- EP-A- 0 354 527
- WO-A-92/07015

## Beschreibung

Die vorliegende Erfindung betrifft reaktive Polyurethan-Hotmelts enthaltend kristallisierende Polyesterpolyole auf Basis von Fumarsäure und 1,6-Hexandiol. Diese Hotmelts weisen über einen sehr breiten Temperaturbereich gute Haftklebeeigenschaften auf.

Reaktive Polyurethan-Hotmelts sind eine stark wachsende Produktgruppe innerhalb der Anwendungen von Polyurethanen auf dem Klebstoffgebiet. Für ihren Aufbau werden vorzugsweise lineare Polyester- und/oder Polyetherpolyole in Kombination mit einem Überschuss von Polyisocyanaten, vorzugsweise Diisocyanaten verwendet.

Die Vorteile dieser Produktklasse liegt vor allem in der Abwesenheit von Lösungsmittel, der Möglichkeit die Produkte in der Hitze mit relativ niedrigen Viskositäten zu applizieren, trotzdem hohe Anfestigkeiten zu erhalten und nach relativ kurzer Zeit wegen der weiteren Reaktion mit Feuchtigkeit Klebverbindungen mit sehr hohem, weit über den Applikationstemperaturen liegendem Wärmestand und exzellenten Lösemittelbeständigkeiten zu erhalten.

Wesentlich für das gute Eigenschaftsprofil der reaktiven Polyurethan-Hotmelts ist ihre Fähigkeit, beim Abkühlen sehr schnell Festigkeiten aufzubauen, die ein Handhaben der gefügten Teile unmittelbar nach dem Fügen erlaubt.

Für den Aufbau der Anfangsfestigkeiten sind wie bei allen Hotmelts nur physikalische Phänomene verantwortlich, da im Sekunden- über Minutenbereich noch keine wesentlichen chemischen Vorgänge ablaufen können. Bei diesen physikalischen Vorgängen handelt es sich vor allem um den starken, kontinuierlich verlaufenden Viskositätsanstieg der sich durch Temperaturerniedrigung ergibt, dem sich unter Umständen noch ein Rekristallisationseffekt überlagert, der einen Sprung in der Zunahme der Festigkeit darstellt.

Eine gute Möglichkeit die Vorgänge beim Abkühlen von Polymerschmelzen zu beschreiben ist die Aufnahme der Änderungen der viskoelastischen Eigenschaften der Schmelzen über die Temperatur. Insbesondere ergibt sich hier die Möglichkeit die Vorgänge über den Temperaturbereich zu studieren, der mit den aktuell interessierenden Bereichen übereinstimmt.

Bei Schwingungsversuchen, d.h. bei sinusförmigen Änderungen der Deformation, macht sich das Relaxationsverhalten eines viskoelastischen Stoffes in einer Phasenverschiebung δ zwischen der angelegten Deformation und der resultierenden Spannung (bzw. Drehmoment) bemerkbar. Dabei gilt definitionsgemäß: Für rein elastische Fluide ist der Phasenwinkel δ = 0° und für rein viskose Flüssigkeiten wird ein Winkel von δ = 90° gemessen. Charakterisierende Kenngrößen sind der Speicher- bzw. Verlustmodul G' / G" (Pa), die komplexe Viskosität η* (Pas) und der Phasenwinkel δ (°).

Besonders die Kenngröße des Speichermoduls G' wird bei der Entwicklung von Klebstoffen unter dem Begriff des sogenannten Dahlquistkriteriums bzw. des PSA-Bandes (pressure sensitive adhesives) genutzt. Dem Dahlquistkriterium wird in der Literatur der Speichermodulbereich G' von 5x10⁴ bis 5x10⁵ Pa zugeordnet. Das Dahlquistkriterium, das heißt das Vorliegen eines Speichermoduls im Bereich von 5x10⁴ bis 5x10⁵ Pa, bedeutet die Fähigkeit von Polymeren zur Verklebung mit sich selbst, anderen Polymeren und sonstigen Substraten.

Das von Dahlquist (C.A. Dahlquist, Proc. Notthingham Conf. On Adhesion Maclaren & Sons Ltd., London 1966, Part III, Chapter 5; oder auch in A.J. Frank, Adhesives Rheology, Broschüre Rheometrics Present at Afera Congress in Chester, 24 September 1992) entwickelte Modell geht zunächst von der rein mechanischen Vorstellung aus, dass bevor die verschiedenen physikalischen Adhäsionsmechanismen (Dipolwechselwirkungen, Wasserstoffbrücken, van der Waalskräfte, Diffusion von Ketten) wirksam werden können, die Materialien in einen innigen Kontakt gebracht werden müssen, so dass diese Kräfte (mit nur einigen Angström Reichweite) überhaupt wirksam werden. Es ist einleuchtend, dass durch hohe Speichermoduli dieses Kontaktproblem stärker wird. Die untere Grenze ist bei Adhäsiven über eine ungenügende Kohäsionsfestigkeit gegeben.

Bei Betrachtung einiger typischer reaktiver Polyurethan-Hotmeltsysteme unter diesen Gesichtspunkten beobachtet man die nachstehend beschriebenen Fälle.

Bei Einsatz von kristallinen Polyolen verläuft der Speichermodul G' bis kurz oberhalb der Rekristallisationstemperatur im Bereich von < 1000 Pa, das heißt die Schmelze hat noch keinerlei Kohäsionsfestigkeit, und zu verklebende Werkstücke müssen mechanisch gehalten werden. Das Dahlquistkriterium wird dann in einem Temperaturbereich von wenigen °C durchlaufen, um sofort Speichermoduli von > 10⁶ Pa aufzubauen, die so hohen Kräften entsprechen, dass sie keinerlei weitere Repositionen der zu verklebenden Substrate mehr zulassen.

Hotmeltsysteme auf Basis kristalliner Polyesterpolyole wie sie z.B. in der EP-A 0 354 527 beschrieben sind, zeigen oberhalb der Rekristallisationstemperatur sehr niedrige Viskositäten, die zwar eine gute Benetzung der Oberfläche ermöglichen aber noch keinerlei Kohäsionsfestigkeiten aufbauen können. Erst mit beginnender Rekristallisation werden, dann allerdings hohe, Anfangsfestigkeiten aufgebaut.

Bei Einsatz von bei Raumtemperatur flüssigen Polyolen wird bis in den Raumtemperaturbereich nicht das Dahlquistkriterium erreicht, das heißt die Substrate, die mit Klebstoffen dieser Art geklebt werden sollen, müssen bis zum Einsetzen einer chemischen Reaktion mit Luftfeuchtigkeit mechanisch fixiert werden.

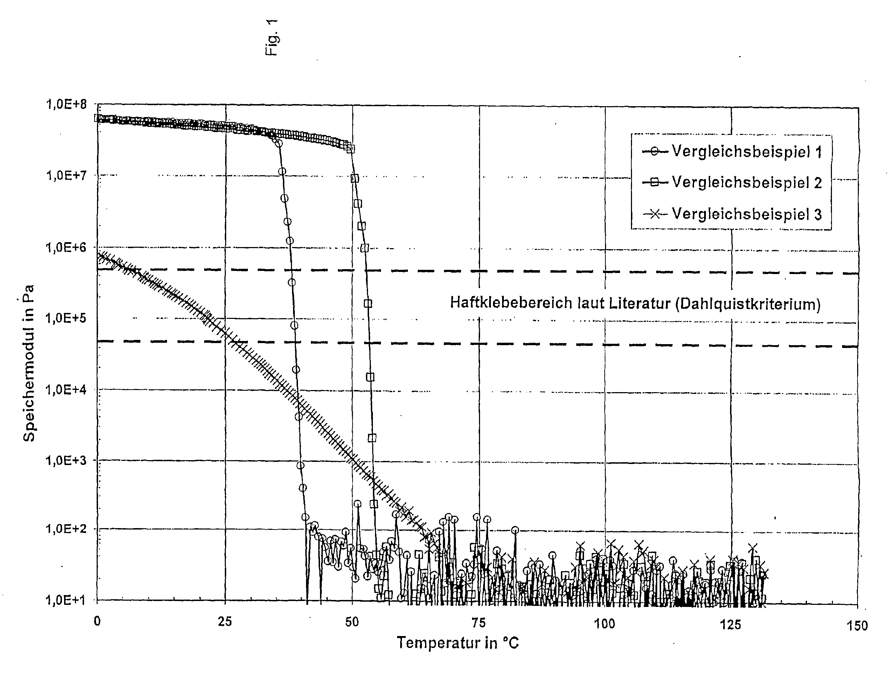

Figur 1 zeigt exemplarisch den Verlauf des Speichermoduls in Abhängigkeit von der Temperatur für den ersten (Vergleichsbeispiele 1 und 2) und den zweiten (Vergleichsbeispiel 3) Fall.

In der Technik versucht man durch Kombination von kristallinen, bei Raumtemperatur flüssigen (Glasübergangstemperaturen Tg <20°C) und amorphen Polyolen mit höheren Glasübergangstemperaturen (Tg >20°C), den Dahlquistbereich zu optimieren, d.h. eine Polymerschmelze mit Haftklebeeigenschaften zu erzielen, die eine gewisse Reposition der zu verklebenden Substrate erlaubt, aber wegen der Haftklebeeigenschaften bereits ausreichend Festigkeit aufweist, um diese Position zu halten.

So sind in "Shaping Reactive Hot Melts Using LMW Copolyesters" , Adhesives Age, November 1987, S. 32 ff. reaktive Polyurethan-Hotmelts enthaltend kristalline, bei Raumtemperatur flüssige und amorphe Polyester beschrieben.

In EP-A 0 340 906 sind reaktive Polyurethan-Hotmelts bestehend aus einer Mischung aus zwei Polyurethanprepolymeren offenbart, wobei das erste Prepolymer aus einem amorphen Polyol mit einer Glasübergangstemperatur > 20°C und das zweite Prepolymer aus einem bei Raumtemperatur flüssigen Polyol (Tg < 20°C) hergestellt wird.

EP-A 0 511 566 beschreibt eine NCO-reaktive Polyurethan-Schmelzklebstoff-Zusammensetzung die erhältlich ist aus einem Gemisch einer bei Raumtemperatur flüssigen oder hochviskosen mehrfunktionellen Polyolkomponente und einer bei Raumtemperatur kristallinen mehrfunktionellen Polyolkomponente.

Höhere Konzentrationen an Polyolen mit hoher Tg bewirken allerdings eine Versprödung der Klebfilme und eine starke Zunahme der Viskosität, die sich negativ auf die Benetzung der Oberfläche auswirken kann.

Es bestand daher die Aufgabe, Formulierungen zu entwickeln, die ein möglichst breites Haftklebefenster bei möglichst hohen Temperaturen aufweisen. Nach Verlassen des Dahlquistkriteriums sollte der Speichermodul G' möglichst schnell in den Bereich von > 10⁶ bis 10⁸ Pa abwandern, um die nötigen Anfangskräfte bei mechanischer Beanspruchung aufzubauen. Unterhalb des Haftklebefensters (G' < 5x10⁴ Pa) sollte die Viskosität dagegen möglichst niedrig sein, um ein gutes Benetzungsverhalten und eine problemlose Applikation (beispielsweise durch Verdüsen oder Rollen) zu ermöglichen.

Es wurde nun gefunden, dass unter Einsatz eines Polyolgemischs enthaltend kristalline Polyesterpolyole, amorphe Polyesterpolyole, flüssige Polyole und Hydroxylpolyester auf Basis von Fumarsäure und 1,6-Hexandiol reaktive Polyurethan-Hotmeltsysteme formuliert werden können, die einen sehr breiten Dahlquistbereich zwischen ca. 35°C und ca. 75°C aufweisen, ohne zur Versprödung zu neigen.

Gegenstand der Erfindung sind somit reaktive Polyurethan-Hotmelts auf Basis von
- A: mindestens einem bifunktionellen Polyisocyanat mit Isocyanatgehalten von 5 bis 50 Gew.-Anteilen (bezogen auf A)
und
- B: einem Polyolgemisch enthaltend mindestens ein kristallisierendes Polyesterpolyol auf Basis von Fumarsäure und 1,6-Hexandiol,
wobei das Verhältnis von A zu B so gewählt wird, dass das molare Verhältnis von NCO zu OH von 1,2 bis 4,0, vorzugsweise von 1,3 bis 3,0 beträgt.

Die erfindungsgemäßen reaktiven Polyurethan-Hotmelts sind besonders geeignet für die Verwendung als Klebstoffe.

Geeignete Polyisocyanate gemäß A sind beispielsweise solche mit Isocyanatgehalten von 5 bis 50 Gew.-% (bezogen auf A) mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-düsocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3-und 1,4-Bis-(2-isocyanato-prop-2-yl)-benzol (TMXDI), 2,4- und/oder 2,6-Diisocyanatotoluol (TDI), 2,2'-, 2,4'- und/oder 4,4'-Diisoeyanatodiphenylmethan (MDI), 1,5-Diisocyanatonaphthalin, 1,3- und 1,4-Bis-(isocyanatomethyl)-benzol.

Bevorzugte Polyisocyanate gemäß A sind 1,6-Diisocyanatohexan (HDI), 1-Iso-cyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI).

Besonders bevorzugte Polyisocyanate gemäß A sind 2,2'-, 2,4'- und/oder 4,4'-Diisocyanatodiphenylmethan (MDI).

Unter einem Polyesterpolyol wird im Rahmen der vorliegenden Erfindung ein Polyester mit mehr als einer OH-Gruppe, bevorzugt zwei endständigen OH-Gruppen verstanden. Solche Polyester sind dem Fachmann bekannt. Sie können auf bekanntem Wege hergestellt werden, beispielsweise aus aliphatischen Hydroxycarbonsäuren oder aus aliphatischen und/oder aromatischen Dicarbonsäuren und einem oder mehreren Diolen. Es können auch entsprechende Derivate eingesetzt werden, wie z.B. Lactone, Ester von niederen Alkoholen oder Anhydride. Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6-Hexandiol, Neopentylglykol, ε-Caprolacton.

Polyesterpolyole sind bei Raumtemperatur entweder flüssig (Glasübergangstemperatur Tg < 20°C) oder fest. Bei Raumtemperatur feste Polyesterpolyole sind dabei entweder amorph (Glasübergangstemperatur Tg > 20°C) oder kristallisierend.

Die erfindungsgemäßen reaktiven Polyurethan-Hotmelts enthalten in ihrer Polyolkomponente B mindestens ein kristallisierendes Polyesterpolyol auf Basis von Fumarsäure und 1,6-Hexandiol (b1).

Sie enthalten in ihrer Polyolkomponente weiterhin mindestens eine weitere Komponente ausgewählt aus mindestens bifunktionellen kristallisierenden Polyesterpolyolen (b2), mindestens bifunktionellen amorphen Polyesterpolyolen (b3), mindestens bifunktionellen bei Raumtemperatur flüssigen Polyesterpolyolen (b4) sowie mindestens bifunktionellen Polyetherpolyolen (b5).

Geeignete kristallisierende Polyesterpolyole auf Basis von Fumarsäure und 1,6-Hexandiol (b1) sind auf dem Fachmann bekannte Weise erhältlich. Sie weisen OH-Zahlen von 10 bis 60 mg KOH/g, bevorzugt 20 bis 40 mg KOH/g und Säurezahlen von <2 mg KOH/g, bevorzugt <1.5 mg KOH/g auf.

Vorzugsweise lassen sich die kristallisierenden Polyesterpolyole auf Basis von Fumarsäure und 1,6-Hexandiol (b1) auf dem Fachmann bekannte Weise mit Hilfe geeigneter Umlagerungskatalysatoren, wie beispielsweise Piperidin, aus Maleinsäureanhydrid und 1,6-Hexandiol herstellen.

Geeignete kristallisierende Polyester (b2) sind beispielsweise solche auf Basis linearer aliphatischer Dicarbonsäuren mit 6 bis 12 Kohlenstoffatomen im Molekül wie z.B. Adipinsäure, Azelainsäure, Sebacinsäure und Dodecandisäure, vorzugsweise Adipinsäure und Dodecandisäure und linearen Diolen mit 4 bis 8 Kohlenstoffatom im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Geeignete amorphe Polyesterpolyole (b3) sind beispielsweise solche auf Basis von Adipinsäure, Isophthalsäure, Terephthalsäure, Ethylenglykol, Neopentylglykol und 3-Hydroxy-2,2-dimethylpropyl-3-hydroxy-2,2-dimethylpropanoat.

Geeignete bei Raumtemperatur flüssige Polyesterpolyol (b4) sind beispielsweise solche auf Basis von Adipinsäure, Ethylenglykol, 1,6-Hexandiol und Neopentylglykol.

Als Polyetherpolyol (b5) geeignet sind die in der Polyurethan-Chemie üblichen Polyether, wie beispielsweise die unter Verwendung von zwei- bis sechswertigen Startermolekülen wie beispielsweise Wasser, Ethylenglykol, 1,2- oder 1,3-Propylenglykol, Neopentylglykol, Glycerin, Trimethylolpropan, Pentaerythrit, Sorbit oder 1- bis 4-NH-Bindungen aufweisenden Aminen hergestellten Additions- oder Mischadditionsverbindungen des Tetrahydrofurans, Styroloxids, Ethylenoxids, Propylenoxids, der Butylenoxide oder des Epichlorhydrins, vorzugsweise des Ethylenoxids und/oder des Propylenoxids. Vorzugsweise sind die bifunktionellen Propylenoxid- und/oder Ethylenoxid-Addukte sowie Polytetrahydrofuran zu nennen. Solche Polyetherpolyole und ihre Herstellung sind dem Fachmann bekannt.

Eine mögliche Ausführungsform der Erfindung ist ein reaktiver Polyurethan-Hotmelt auf Basis von
- A: mindestens einem bifunktionellen Polyisocyanat mit Isocyanatgehalten von 5 bis 50 Gew.-Anteilen
und
- B: einem Polyolgemisch bestehend aus
b1) 15 bis 55 Gew.-Anteilen kristallisierender Polyesterpolyole auf Basis von Fumarsäure und 1,6-Hexandiol mit Hydroxylzahlen von 20 bis 40 mg KOH/g und Säurezahlen von < 2 mg KOH/g.
b2) 0 bis 85 Gew.-Anteilen mindestens bifunktioneller kristallisierender Polyesterpolyole,
b3) 0 bis 85 Gew.-Anteilen mindestens bifunktioneller bei Raumtemperatur flüssiger Polyesterpolyole,
b4) 0 bis 60 Gew.-Anteilen mindestens bifunktioneller amorpher Polyesterpolyole,
b5) 0 bis 40 Gew.-Anteilen mindestens bifunktioneller Polyetherpolyole,
wobei die Summe der Gew.-Anteile der Komponenten b1) bis b5) 100 Gewichtsteile, ergibt.

Dabei wird das Verhältnis von A zu B so gewählt, dass das molare Verhältnis von NCO zu OH von 1.3 bis 3.0 beträgt.

Eine bevorzugte Ausführungsform der Erfindung ist ein reaktiver Polyurethan-Hotmelt auf Basis von
- A: mindestens einem bifunktionellen Polyisocyanat mit Isocyanatgehalten von 5 bis 50 Gew.-Anteilen
und
- B: einem Polyolgemisch bestehend aus
b1) 15 bis 30 Gew.-Anteilen kristallisierender Polyesterpolyole auf Basis von Fumarsäure und 1,6-Hexandiol mit Hydroxylzahlen von 20 bis 40 mg KOH/g und Säurezahlen von < 2 mg KOH/g.
b2) 20 bis 85 Gew.-Anteilen mindestens bifunktioneller kristallisierender Polyesterpolyole,
b3) 0 bis 70 Gew.-Anteilen mindestens bifunktioneller bei Raumtemperatur flüssiger Polyesterpolyole,
b4) 0 bis 40 Gew.-Anteilen mindestens bifunktioneller amorpher Polyesterpolyole,
b5) 0 bis 30 Gew.-Anteilen mindestens bifunktioneller Polyetherpolyole,
wobei die Summe der Gew.-Anteile der Komponenten b1) bis b5) 100 Gew.-Anteile, ergibt.

Für bestimmte Anwendungen des erfindungsgemäßen PU-Hotmelt kann es bevorzugt sein, dass das Polyolgemisch (B) aus 15 bis 30 Gew.-Anteilen,b1), 20 bis 75 Gew.-Anteilen b2) und 10 bis 65 Gew.-Anteilen b3) besteht, wobei die Summe der Gew.-Anteile 100 ergibt.

Eine ebenfalls bevorzugte Ausführungsform der Erfindung ist ein reaktiver Polyurethan-Hotmelt dessen Polyolgemisch B aus 15 bis 30 Gew.-Anteilen b1), 30 bis 75 Gew.-Anteilen b2) und 10 bis 40 Gew.-Anteilen b4) besteht, wobei die Summe der Gew.-Anteile 100 ergibt.

Es kann desweiteren bevorzugt sein, dass das Polyolgemisch B aus 15 bis 30 Gew.-Anteilen b1), 40 bis 80 Gew.-Anteilen b2) und 5 bis 30 Gew.-Anteilen b5) besteht, wobei die Summe der Gew.-Anteile 100 ergibt.

Bevorzugt kann es auch sein, dass das Polyolgemisch B aus 15 bis 30 Gew.-Anteilen b1), 20 bis 75 Gew.-Anteilen b2) und 10 bis 60 Gew.-Anteilen b3) und 10 bis 40 Gew.-Anteilen b4) besteht, wobei die Summe der Gew.-Anteile 100 ergibt.

Abschließend ist es auch möglich und ebenfalls bevorzugt, das Polyolgemisch B aus 15 bis 30 Gew.-Anteilen b1), 20 bis 75 Gew.-Anteilen b2) und 10 bis 60 Gew.-Anteilen b3), 10 bis 40 Gew.-Anteilen b4) und 5 bis 30 Gew.-Anteilen b5) besteht, wobei die Summe der Gew.-Anteile 100 ergibt.

Dabei wird das Verhältnis von A zu B so gewählt, dass das molare Verhältnis von NCO zu OH von 1,3 bis 3,0 beträgt.

Die Hotmeltsysteme können mit die Reaktion mit Feuchtigkeit aktivierenden Katalysatoren, anorganischen oder organischen Füllstoffen, Farbstoffen, Harzen und/oder Streckölen in üblicher Weise modifiziert werden.

Die Herstellung der Isocyanatgruppen enthaltenden reaktiven Hotmeltsysteme erfolgt beispielsweise derart, daß die flüssigen Polyole mit einem Überschuß der Polyisocyanate vermischt werden und die homogene Mischung abgefüllt wird oder bis zum Erhalt eines konstanten NCO-Wertes, der meist nach zwei Stunden erreicht wird, gerührt wird und dann abgefüllt wird. Als Reaktionstemperatur werden 60 bis 150°C, vorzugsweise 80 bis 130°C gewählt. Selbstverständlich kann die Herstellung der reaktiven Hotmelts auch kontinuierlich in einer Rührkesselkaskade oder geeigneten Mischaggregaten, wie beispielsweise schnelldrehenden Mischern nach dem Rotor-Stator-Prinzip, erfolgen.

Es ist selbstverständlich möglich, die Polyester- und/oder Polyetherpolyole oder einen Teil derselben mit einem Unterschuss an Diisocyanaten, vorzugsweise 1,6-Diisocyanatohexan (HDI), 2,4- und/oder 2,6-Diisocyanatotoluol (TDI) und/oder 2,4'-und/oder 4,4'-Diisocyanatodiphenylmethan (MDI), zu modifizieren und nach beendeter Reaktion die urethangruppenhaltigen Polyole mit einem Überschuß von Diisocyanaten zu einem Isocyanatgruppen enthaltendem Hotmelt umzusetzen.

Ebenso ist es möglich, die Umsetzung der Polyole mit den Diisocyanaten in Gegenwart von bis zu 5 Gew.-% von beispielsweise Trimerisaten aliphatischer Diisocyanate, wie beispielsweise Hexamethylendiisocyanat, durchzuführen oder solche Trimerisate nach beendeter Prepolymerisierung zuzusetzen.

Die erfindungsgemäßen Hotmeltsysteme können als Klebstoffe vielfältig eingesetzt werden, beispielsweise als Montageklebstoff zur vorläufigen Fixierung von Bauteilen als Buchbindeklebstoff oder Klebstoffe für die Herstellung von Kreuzbodenventilsäcken, Verbundfolien oder Laminaten oder als Kantenumleimer.

Ein weiterer Gegenstand der Erfindung ist somit die Verwendung der erfindungsgemäßen reaktiven Polyurethan-Hotmelts als Klebstoffe.

### Beispiele

### Beispiel für die Herstellung eines Polyesters auf Basis Fumarsäure und 1,6-Hexandiol (Polyester B):

7 899 g 1,6-Hexandiol und 32,5 g Toluhydrochinon-Lösung (40 %ig in Dowanol^{®} PM, Fa. Dow Chemicals) werden in einen 15-1-Rührkessel, der mit einem Rührer, einer Destillationsbrücke mit Kolonne und mit einem Stickstoffeinleitungsrohr ausgerüstet ist, eingewogen und bei einer Temperatur von 120°C aufgeschmolzen. Dabei wird ein Stickstoffstrom von 15 bis 16 L/Stunde durch den Kessel geleitet. Sobald der Kesselinhalt rührbar ist, wird der Ansatz mit einer Geschwindigkeit von 20 U/min gerührt. Nach dem vollständigen Aufschmelzen des 1,6-Hexandiols werden bei 120°C portionsweise 7 394 g Fumarsäure zugegeben. Der Stickstoffstrom wird auf das doppelte Kesselvolumen (30 bis 32 L/Stunde) gesteigert und unter einer Kopftemperaturbegrenzung von max. 105°C auf 180°C aufgeheizt. Dabei wird das Reaktionswasser größtenteils abgespalten, wobei eine Sumpftemperatur von 180°C erreicht wird. Es wird bei 180°C so lange kondensiert, bis eine Säurezahl von 10 bis 12 mg KOH/g erreicht ist. Dann werden 0,39 g Zinn-(II)-chlorid-2-hydrat zugegeben und eine Kolonne mit Claisenbrücke und gekühlter Vorlage auf den Reaktionskessel aufgesetzt. Der Stickstoffstrom wird auf 2 bis 3 L/Stunde reduziert und langsam ein Vakuum von ca. 15 mbar angelegt. Der Reaktionsansatz wird unter diesen Bedingungen gehalten, bis eine Säurezahl von <1,5 mg KOH/g erreicht ist. Danach wird der Ansatz auf 120°C abgekühlt und abgefüllt. Der so hergestellte Polyester weist eine Hydroxylzahl von 31 mg KOH/g (bestimmt nach DIN 53 240 Teil 2) und eine Säurezahl von 0,8 mg KOH/g (bestimmt nach DIN 2114) auf.

### Beispiel für die Herstellung eines Fumarsäure/1,6-Hexandiol-Polyesters aus Maleinsäureanhydrid und 1,6-Hexandiol (Polyester K):

3 038 g 1,6-Hexandiol, 5 g Piperidin und 12,5 g Toluhydrochinon-Lösung (40 %ig in Dowanol^{®} PM, Fa. Dow Chemicals) werden in einen 5-1-Rührkessel, der mit einem

Rührer, einer Destillationsbrücke mit Kolonne und mit einem Stickstoffeinleitungsrohr ausgerüstet ist, eingewogen und bei einer Temperatur von 120°C aufgeschmolzen. Dabei wird ein Stickstoffstrom von 5 bis 6 L/Stunde durch den Kessel geleitet. Sobald der Kesselinhalt rührbar ist, wird der Ansatz mit einer Geschwindigkeit von 20 U/min gerührt. Nach dem vollständigen Aufschmelzen des 1,6-Hexandiols werden bei 120°C portionsweise 2/403 g Maleinsäureanhydrid zugegeben. Der Stickstoffstrom wird auf das doppelte Kesselvolumen (10 bis 12 L/Stunde) gesteigert und unter einer Kopftemperaturbegrenzung von max. 105°C auf 180°C aufgeheizt. Dabei wird das Reaktionswasser größtenteils abgespalten, wobei eine Sumpftemperatur von 180°C erreicht wird. Es wird bei 180°C so lange kondensiert, bis eine Säurezahl von 10 bis 12 mg KOH/g erreicht ist. Dann werden 0,15 g Zinn-(II)-chlorid-2-hydrat zugegeben und eine Kolonne mit Claisenbrücke und gekühlter Vorlage auf den Reaktionskessel aufgesetzt. Der Stickstoffstrom wird auf 2 bis 3 L/Stunde reduziert und langsam ein Vakuum von ca. 15 mbar angelegt. Der Reaktionsansatz wird unter diesen Bedingungen gehalten, bis eine Säurezahl von <1,5 mg KOH/g erreicht ist. Danach wird der Ansatz auf 120°C abgekühlt und abgefüllt. Der so hergestellte Polyester weist eine Hydroxylzahl von 32 mg KOH/g (bestimmt nach DIN 53 240 Teil 2) und eine Säurezahl von 1,5 mg KOH/g (bestimmt nach DIN 2114) auf.

In den Beispielen und Vergleichsbeispielen wurden die folgenden Polyole verwendet:

### Polyester A:

Polyesterpolyol auf Basis von Fumarsäure und 1,6-Hexandiol mit einer Hydroxylzahl von 20 mg KOH/g und einer Säurezahl von 1,3 mg KOH/g. Die Herstellung erfolgt analog der von Polyester B.

### Polyester B:

Polyesterpolyol auf Basis von Fumarsäure und 1,6-Hexandiol mit einer Hydroxylzahl von 31 mg KOH/g und einer Säurezahl von 0,8 mg KOH/g. Die Herstellung erfolgt wie oben angegeben.

### Polyester C:

Polyesterpolyol auf Basis von Fumarsäure und 1,6-Hexandiol mit einer Hydroxylzahl von 40 mg KOH/g und einer Säurezahl von 1,0 mg KOH/g. Die Herstellung erfolgt analog der von Polyester B.

### Polyester D:

Polyesterpolyol auf Basis von Adipinsäure und 1,6-Hexandiol mit einer Hydroxylzahl von etwa 30 mg KOH/g und einer Säurezahl von etwa 0,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester E:

Polyesterpolyol auf Basis von Dodecandisäure und 1,6-Hexandiol mit einer Hydroxylzahl von etwa 30 mg KOH/g und einer Säurezahl von etwa 0,8 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester F:

Polyesterpolyol mit folgender Zusammensetzung

| | Gewichtsanteil am Polyester in % |
|---|---|
| Ethylenglykol | ca.15,4 |
| 1,6-Hexandiol | ca. 20,4 |
| Neopentylglykol | ca. 7,8 |
| Adipinsäure | ca. 31,6 |
| Terephthalsäure | ca. 24,8 |

und einer Hydroxylzahl von etwa 31,8 mg KOH/g und einer Säurezahl von etwa 1,2 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester G:

Polyesterpolyol mit folgender Zusammensetzung

| | Gewichtsanteil am Polyester in % |
|---|---|
| Ethylenglykol | ca. 17,0 |
| 1,6-Hexandiol | ca. 19,5 |
| Neopentylglykol | ca. 8,1 |
| Adipinsäure | ca. 55,4 |

und einer Hydroxylzahl von etwa 22 mg KOH/g und einer Säurezahl von etwa 1,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester H:

Polyesterpolyol mit folgender Zusammensetzung

| | Gewichtsanteil am Polyester in % |
|---|---|
| Ethylenglykol | ca. 15,3 |
| Neopentylglykol | ca. 10,3 |
| 3-Hydroxy-2,2-dimethylpropyl-3-hydroxy-2,2-dimethylpropanoat | ca. 21,0 |
| Adipinsäure | ca. 6,0 |
| Isophthalsäure | ca. 20,7 |
| Terephthalsäure | ca. 26,7 |

und einer Hydroxylzahl von etwa 34,7 mg KOH/g und einer Säurezahl von etwa 1,2 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyether I:

Polypropylenoxid mit einer Hydroxylzahl von etwa 112 mg KOH/g.

Der Polyether wird auf allgemein bekannte Weise KOH-katalytisch hergestellt, z.B. nach L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff.

### Herstellung der Polyurethan-Hotmelts (Beispiele und Vergleichsbeispiele):

In einem 2L-Planschliffbecher wird 1 mol der in Tabelle 1 angegebene Polyol-Mischung vorgelegt, bei 130°C aufgeschmolzen und dann 1h bei 130°C und 15 mbar (+/- 10 mbar) Unterdruck entwässert. Anschließend gibt man 2 mol 4,4'-Diisocyanatodiphenylmethan (Desmodur^{®} 44 M, Bayer AG, Leverkusen) hinzu. Nach einer Einrührzeit von 20 min werden die Produkte in Alukartuschen abgefüllt und diese Luftdicht verschlossen. Die Kartuschen werden dann 4h bei 100°C im Umlufttrockenschrank getempert.

### Rheologische Charakterisierung der reaktiven Polyurethan-Hotmelts:

Vor der Untersuchung werden die Produkte, welche in Alu-Kartuschen abgefüllt sind, in einem Umluftheizschrank bei ca. 125°C ca. 30 min lang aufgeschmolzen. Für die Messung der viskoelastischen Kenngrößen an Polyurethan -Hotmelts wird bei der festen Frequenz von 1 Hz gemessen. Die Temperatur wird von 130°C auf 0°C mit einer Abkühlrate von 2°C/min gefahren. Da die Proben beim Abkühlen schrumpfen, muss die Messung mit einem Rheometer durchgeführt werden, welches über eine "Auto Tension Funktion" verfügt.

Die Charakterisierung der viskoelastischen Eigenschaften der reaktiven Polyurethan-Hotmelts erfolgt mit dem Rheometer VOR-Melt der Fa. BOHLIN Instruments mittels Oszillationsprogramm und dem Platte/Platte-System 25HT. Das Gerät dient zur Charakterisierung der viskoelastischen Eigenschaften von hochviskosen Substanzen wie Kunststoffschmelzen, Kautschuken usw. in Abhängigkeit von der Temperatur und der Frequenz.

Der Speichermodul als Funktion der Temperatur ist für die Vergleichsbeispiele 1,2 und 3 in Figur 1 dargestellt. In diesen Figuren ist der Bereich für das Dahlquistkriterium durch seine obere und untere Grenze gekennzeichnet.

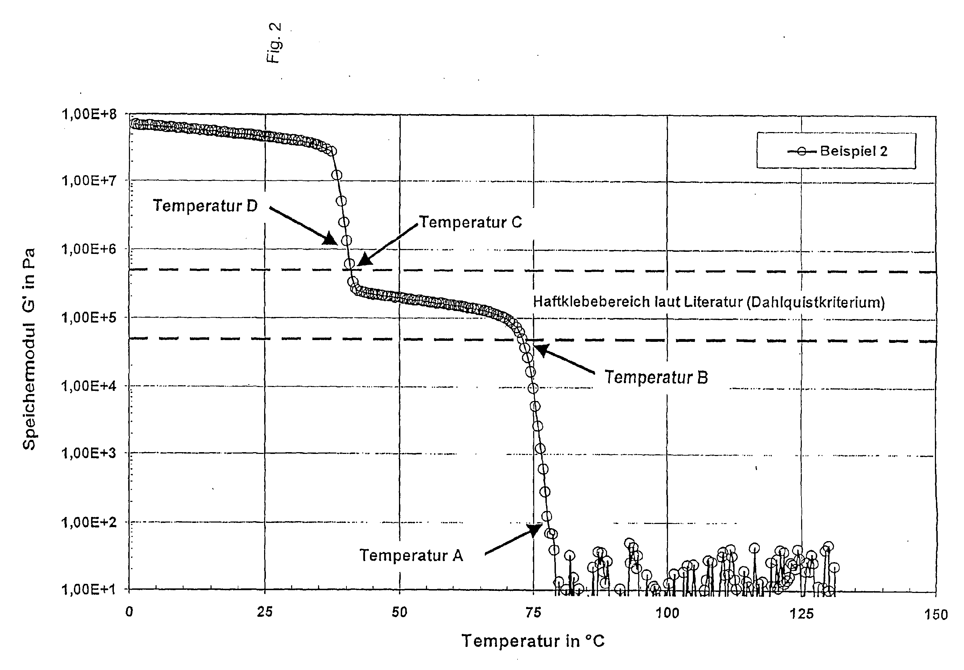

Für die Beispiele und die Vergleichsbeispiele wird der Verlauf des Speichermoduls in Abhängigkeit von der Temperatur durch die vier charakteristischen Temperaturen A, B, C und D beschrieben. Diese sind zur Illustration in Figur 2 eingezeichnet. Oberhalb der Temperatur A weist der Speichermodul G' Werte kleiner als 10² Pa auf. In diesem Bereich ist die Schmelze ausreichend dünnflüssig um eine gute Benetzung der zu verklebenden Substrate zu gewährleisten. Bei der Temperatur B erreicht der Speichermodul einen Wert von 5x10⁴ Pa, d.h. ab dieser Temperatur verläuft der Speichermodul innerhalb des PSA-Bandes (Dahlquist-Kriterium). Bei der Temperatur C erreicht der Speichermodul einen Wert von 5x10⁵ Pa, d.h. unterhalb dieser Temperatur verläuft der Speichermodul oberhalb des PSA-Bandes. Zwischen den Temperaturen B und C zeigt die Polymerschmelze Haftklebeeigenschaften, die eine gewisse Reposition der zu verklebenden Substrate erlauben, aber wegen der Haftklebeeigenschaften weist sie bereits ausreichend Festigkeit auf, um diese Position zu halten. Unterhalb der Temperatur D erreicht der Speichermodul Werte > 10⁶ Pa, dies entspricht schon so hohen Kräften, dass keinerlei weitere Repositionen der zu verklebenden Substrate mehr möglich ist. Die charakteristischen Temperaturen A, B, C und D sind in der Tabelle 1 für die Beispiele und Vergleichsbeispiele zusammengefasst.

### Messung des Hot-Tack:

Vor der Untersuchung werden die Produkte, welche in Alu-Kartuschen abgefüllt sind, in einem Umluftheizschrank bei ca. 125°C ca. 30 min lang aufgeschmolzen. Dann wird mit Hilfe eines Rakels ein 0,2 mm dicker Film des entsprechenden Produkts auf einer Aluminiumplatte hergestellt und der Hot-Tack mittels eines bei der Bayer AG entwickelten vollautomatischen Messgeräts bestimmt. (Eine Beschreibung findet sich in H.-W. Lucas, et.al., "Hot-Tack Measurements: An Efficient Development Tool for Water-Based Polyurethanes" in Adhesives Age, Februar 1997, Seite 18 ff.).

Dazu wird der aufgeraktelte Film mit einem Temperaturgradienten beaufschlagt. Danach wird mittels eines Roboterarms ein Stempel aus VA-Stahl mit einem Anpressdruck von 10 bar für 15 s auf die Klebstoffprobe gepresst. Anschließend werden Stempel und Probe mit einer Abzugsgeschwindigkeit von 2 mm/s voneinander getrennt. Dabei wird die Kraft (Tackkraft) gemessen, die notwendig ist, um Stempel und Probe zu trennen.

### Diskussion der Ergebnisse:

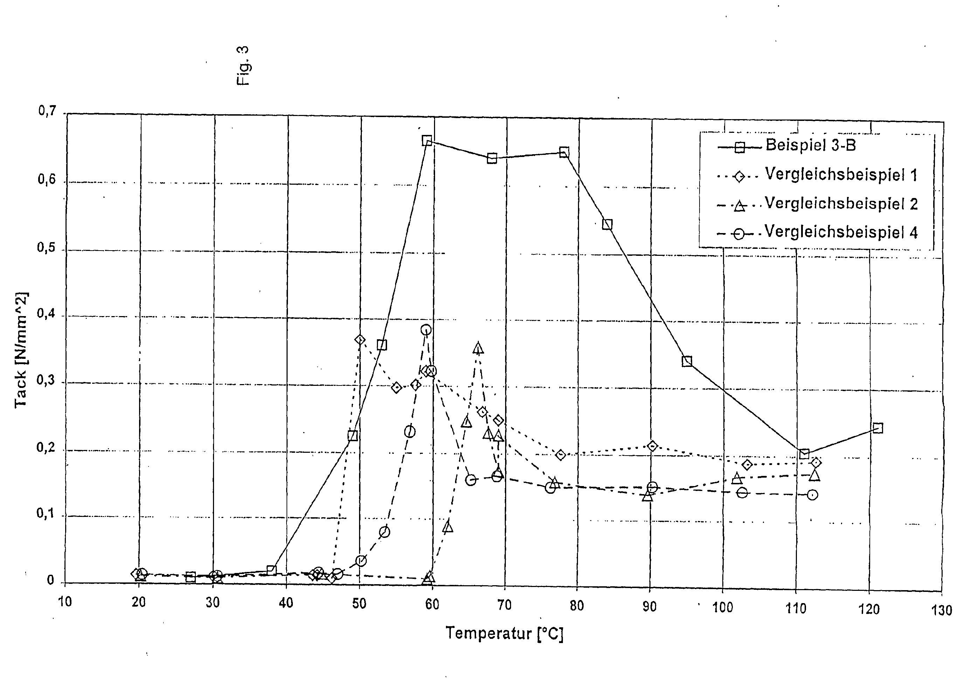

Bei den kristallinen Polyesterpolyolen (Vergleichsbeispiele 1 und 2 in Figur 1) verläuft der Speichermodul G' bis kurz oberhalb der Rekristallisationstemperatur von ca. 40°C bzw. ca. 55°C im Bereich < 1000 Pa, was bedeutet, dass die Schmelze noch keinerlei Kohäsionsfestigkeit hat und zu verklebende Werkstücke mechanisch gehalten werden müssen. Das Dahlquistkriterium wird in einem Temperaturbereich von wenigen Graden durchlaufen, um sofort Speichermoduli von > 10⁶ Pa aufzubauen, die schon so hohen Kräften entsprechen, dass sie keinerlei weitere Repositionen der zu verklebenden Substrate mehr zulassen. Diese Beobachtungen werden durch Messung des Hot-Tack bestätigt (siehe Vergleichsbeispiele 1, 2 und 4 in Figur 3). Unterhalb der Schmelztemperatur der Polyesterpolyole, d.h. in dem Bereich, in dem der Speichermodul G' Werte > 10⁶ Pa aufweist, ist der Klebstofffilm fest. Dementsprechend lässt sich kein inniger Kontakt zwischen Stempel und Polymerprobe herstellen und es wird kein Hot-Tack gemessen. Erst bei der Schmelztemperatur des kristallinen Polyesterpolyols, hier verläuft der Speichermodul G' zwischen 5x10⁴ Pa und 5x10⁵ Pa, also im Bereich des PSA-Bandes, können Stempel und Polymerprobe in einen so innigen Kontakt gebracht werden, dass die kurzreichweitigen physikalischen Adhäsionsmechanismen wirksam werden und die Probe einen messbaren Tack aufweist. Oberhalb der Schmelztemperatur (Speichermodul G' < 1000 Pa) liegt der Polymerfilm als Schmelze vor und zeigt keine ausreichende Kohäsionsfestigkeit mehr, was dazu führt, dass der Hot-Tack wieder abnimmt. Solche reaktiven Polyurethan-Hotmelts weisen nur in einem sehr engen Temperaturbereich von wenigen °C Haftklebeigenschaften auf. Oberhalb dieses Temperaturbereichs müssen die Verklebungen mechanisch fixiert werden und unterhalb dieses Temperaturbereichs sind die Kräfte schon so groß, dass sie keinerlei weitere Repositionen der zu verklebenden Substrate mehr zulassen. Dies führt dazu, dass nach dem Fügen der zu verklebenden Teile keine Korrektur der Verklebung mehr möglich ist.

Bei dem bei Raumtemperatur flüssigen Polyol (Vergleichsbeispiel 3 in Figur 1) wird bis in den Raumtemperaturbereich nicht das Dahlquistkriterium erreicht, das heißt, Substrate, die mit Klebstoffen dieser Art geklebt werden sollen, müssen bis zum Einsetzen einer chemischen Reaktion mit Luftfeuchtigkeit mechanisch fixiert werden.

Im Falle der erfindungsgemäßen reaktiven Polyurethan-Hotmelts (siehe z.B. Beispiel 2 in Figur 2) verläuft dagegen der Speichermodul G' in einem breiten Temperaturfenster zwischen ca. 35°C und ca. 75°C innerhalb des PSA-Bandes (Dahlquistkriterium), das heißt, die Polymerschmelze hat Haftklebeeigenschaften, die zwar eine gewisse Reposition der zu verklebenden Substrate erlaubt, aber wegen der Haftklebeeigenschaften bereits ausreichend Festigkeit aufweist, um diese Position zu halten. Oberhalb von ca. 75°C verläuft der Speichermodul G' < 1000 Pa, d.h. hier liegt der reaktive Polyurethan-Hotmelt als niedrigviskose Schmelze vor und ist damit in der Lage für eine gute Benetzung der zu verklebendenen Teile zu sorgen. Unterhalb von ca. 35°C baut der Speichermodul sofort Werte von > 10⁶ Pa auf. Dies entspricht schon so hohen Kräften, dass keinerlei weitere Repositionen der zu verklebenden Substrate mehr möglich ist. Auch hier bestätigt die Messung des Hot-Tack die Ergebnisse der viskoelastischen Messungen (Beispiel 3-B in Figur 3). Die reaktiven Polyurethan-Hotmelts zeigen in einem sehr breiten Temperaturbereich einen Hot-Tack, d.h. sie weisen in diesem Temperaturbereich Haftklebeeigenschaften auf.

Dies stellt einen entscheidenen Vorteil bei der Anwendung dar, da diese Systeme aufgrund ihrer Haftklebeeigenschaften bereits ausreichend Festigkeit aufweisen, damit die zu verklebenden Substrate ihre Position ohne mechanische Fixierung halten, auf der anderen Seite aber auch noch eine gewisse Reposition der zu verklebenden Substrate und somit eine Korrektur der Verklebung möglich ist.

**Tabelle 1: Zusammensetzung der Polyol-Mischungen für die verschiedenen Beispiele und Vergleichsbeispiele und charakteristische Temperaturen für den Verlauf des Speichermoduls Gin Abhängigkeit von der Temperatur (Erläuterung siehe Text)**

| **Beispiel Nr.** | **Zusammensetzung der Polyol-Mischung** | | | | | | **Temperatur in °C** | | | |
|---|---|---|---|---|---|---|---|---|---|---|
| | **Polyol 1** | **Gewichtsanteil in %** | **Polyol 2** | **Gewichtsanteil in%** | **Polyol 3** | **Gewichtsanteil in %** | **A** | **B** | **C** | **D** |
| Vergleichs- beispiel 1 | Polyester D | 100 | --- | --- | --- | --- | ca.41 | ca. 38,5 | ca.38 | ca. 37,5 |
| Vergleichs- beispiel 2 | Polyester E | 100 | --- | --- | --- | --- | ca. 54,5 | ca. 53,5 | ca. 53 | ca. 52,5 |
| Vergleichs- beispiel 3 | Polyester F | 100 | --- | --- | --- | --- | ca. 63 | ca. 25,5 | ca. 5 | < 0 |
| Vergleichs- beispiel 4 | Polyester D | 70 | Polyester E | 30 | --- | --- | ca. 52,5 | ca. 49,5 | ca. 46,5 | ca. 46 |
| Beispiel 1 | Polyester D | 80 | Polyester A | 20 | --- | --- | ca. 75 | ca. 65 | ca. 40,5 | ca. 40 |
| Beispiel 2 | Polyester D | 80 | Polyester B | 20 | --- | --- | ca. 77,5 | ca. 73 | ca. 41 | ca. 40,5 |
| Beispiel 3-A | Polyester D | 85 | Polyester C | 15 | --- | --- | ca. 65,5 | ca. 55,5 | ca. 40,5 | ca. 40 |
| Beispiel 3-B | Polyester D | 80 | Polyester C | 20 | --- | --- | ca. 68 | ca. 63 | ca. 40,5 | ca. 40 |
| Beispiel 4 | Polyester D | 20 | Polyester G | 60 | Polyester B | 20 | ca. 77,5 | ca. 68,5 | ca. 33,5 | ca. 33 |
| Beispiel 5 | Polyester D | 60 | Polyester H | 20 | Polyester B | 20 | ca. 75,5 | ca. 70,5 | ca. 37 | ca. 36,5 |
| Beispiel 6 | Polyester E | 45 | Polyester B | 55 | --- | --- | > 130 | ca. 77 | ca. 60,5 | ca. 60 |
| Beispiel 7 | Polyester D | 60 | Polyether I | 20 | Polyester B | 20 | ca. 75,5 | ca. 66 | ca. 36 | ca. 35,5 |

## Patentansprüche

1. Reaktive Polyurethan-Hotmelts auf Basis von
A mindestens einem bifunktionellen Polyisocyanat mit Isocyanatgehalten von 5 bis 50 Gew.-% (bezogen auf A)
und
B einem Polyolgemisch enthaltend mindestens ein kristallisierendes Polyesterpolyol (b1) auf Basis von Fumarsäure und 1,6-Hexandiol
wobei das Verhältnis von A zu B so gewählt wird, dass das molare Verhältnis von NCO zu OH von 1,2 bis 4,0 beträgt.

2. Reaktive Polyurethan-Hotmelts gemäß Anspruch 1, **dadurch gekennzeichnet, dass** der Anteil des kristallisierenden Polyesterpolyols (b1) auf Basis von Fumarsäure und 1,6-Hexandiol an der Polyolkomponente B 15 bis 55 Gew.-Anteile beträgt.

3. Reaktive Polyurethan-Hotmelts gemäß Anspruch 1, **dadurch gekennzeichnet, dass** der Anteil des kristallisierenden Polyesterpolyols (b1) auf Basis von Fumarsäure und 1,6-Hexandiol an der Polyolkomponente B 15 bis 30 Gew.-Anteile beträgt.

4. Reaktive Polyurethan-Hotmelts gemäß Anspruch 1, **dadurch gekenzeichnet,** dass der Anteil mindestens bifunktioneller kristallisierender Polyesterpolyole (b2) an der Polyolkomponente B bis zu 85 Gew.-Anteile beträgt.

5. Reaktive Polyurethan-Hotmelts gemäß Anspruch 1, **dadurch gekennzeichnet, dass** der Anteil bei Raumtemperatur flüssiger Polyesterpolyole (b3) an der Polyolkomponente B bis zu 85 Gew.-Anteile beträgt.

6. Reaktive Polyurethan-Holtmelts gemäß Anspruch 1, **dadurch gekennzeichnet, dass** der Anteil amorpher Polyesterpolyole (b4) an der Polyolkomponente B bis zu 60 Gew.-Anteile beträgt.

7. Reaktive Polyurethan-Holtmelts gemäß Anspruch 1, **dadurch gekennzeichnet, dass** der Anteil Polyetherpolyole (b5) an der Polyolkomponente B bis zu 40 Gew.-Anteile beträgt.

8. Reaktive Polyurethan-Hotmelts gemäß einem oder mehreren der vorstehenden Ansprüche, **dadurch gekennzeichnet, dass** das Verhältnis von A zu B so gewählt wird, dass das molare Verhältnis von NCO zu OH von 1,3 bis 3,0 beträgt.

9. Verfahren zur Herstellung der reaktiven Polyurethan-Holtmelts gemäß Anspruch 1, **dadurch gekennzeichnet, dass** das die flüssigen Polyole B mit einem Überschuß der Polyisocyanate A vermischt werden und die homogene Mischung abgefüllt wird oder die Mischung bis zum Erhalt eines konstanten NCO-Wertes gerührt wird und dann abgefüllt wird.

10. Verwendung der reaktiven Polyurethan-Hotmelts gemäß einem der Ansprüche 1 bis 8 als Klebstoffe.

## Claims

1. Reactive polyurethane hot melts based on
A at least one bifunctional polyisocyanate with isocyanate contents of 5 to 50 wt.% (based on A)
and
B a polyol mixture containing at least one crystallising polyester polyol (b1) based on fumaric acid and 1,6-hexanediol
wherein the ratio of A to B is selected such that the molar ratio of NCO to OH is 1.2 to 4.0.

2. Reactive polyurethane hot melts according to claim 1, **characterised in that** the proportion of crystallising polyester polyol (b1) based on fumaric acid and 1,6-hexanediol in polyol component B is 15 to 55 percent by weight.

3. Reactive polyurethane hot melts according to claim 1, **characterised in that** the proportion of crystallising polyester polyol (b1) based on fumaric acid and 1,6-hexanediol in polyol component B is 15 to 30 percent by weight.

4. Reactive polyurethane hot melts according to claim 1, **characterised in that** the proportion of at least bifunctional crystallising polyester polyols (b2) in polyol component B is up to 85 percent by weight.

5. Reactive polyurethane hot melts according to claim 1, **characterised in that** the proportion of polyester polyols (b3) liquid at room temperature in polyol component B is up to 85 percent by weight.

6. Reactive polyurethane hot melts according to claim 1, **characterised in that** the proportion of amorphous polyester polyols (b4) in polyol component B is up to 60 percent by weight.

7. Reactive polyurethane hot melts according to claim 1, **characterised in that** the proportion of polyether polyols (b5) in polyol component B is up to 40 percent by weight.

8. Reactive polyurethane hot melts according to one or more of the preceding claims, **characterised in that** the ratio of A to B is selected such that the molar ratio of NCO to OH is 1.3 to 3.0.

9. Process for the production of the reactive polyurethane hot melts according to claim 1, **characterised in that** the liquid polyols B are mixed with an excess of polyisocyanates A and the homogeneous mixture is filled or the mixture is stirred until a constant NCO value is obtained and then filled.

10. Use of the reactive polyurethane hot melts according to claims 1 to 8 as adhesives.

## Revendications

1. Adhésifs thermofusibles réactifs en polyuréthanne à base de :
A au moins un polyisocyanate bifonctionnel avec une teneur en isocyanates allant de 5 à 50% en poids (sur base de A)
et
B un mélange de polyols, contenant au moins un polyester-polyol (b1) cristallisant, à base d'acide fumarique et de 1,6-hexanediol
où le rapport de A à B est choisi de sorte que le rapport molaire de NCO à OH se situe dans l'intervalle allant de 1,2 à 4,0.

2. Adhésifs thermofusibles réactifs en polyuréthanne suivant la revendication 1, **caractérisés en ce que** la proportion de polyester-polyol (b1) cristallisant, à base d'acide fumarique et de 1,6-hexanediol, dans le composant polyol B se situe dans l'intervalle allant de 15 à 55 parties en poids..

3. Adhésifs thermofusibles réactifs en polyuréthanne suivant la revendication 1, **caractérisés en ce que** la proportion de polyester-polyol (b1) cristallisant, à base d'acide fumarique et de 1,6-hexanediol, dans le composant polyol B se situe dans l'intervalle allant de 15 à 30 parties en poids.

4. Adhésifs thermofusibles réactifs en polyuréthanne suivant la revendication 1, **caractérisés en ce que** la proportion de polyester-polyol (b2) cristallisant, au moins bifonctionnel, dans le composant polyol B peut atteindre 85 parties en poids.

5. Adhésifs thermofusibles réactifs en polyuréthanne suivant la revendication 1, **caractérisés en ce que** la proportion de polyester-polyol (b3) liquide à température ambiante, dans le composant polyol B peut atteindre 85 parties en poids.

6. Adhésifs thermofusibles réactifs en polyuréthanne suivant la revendication 1, **caractérisés en ce que** la proportion de polyester-polyol (b4) amorphe dans le composant polyol B peut atteindre 60 parties en poids.

7. Adhésifs thermofusibles réactifs en polyuréthanne suivant la revendication 1, **caractérisés en ce que** la proportion de polyéther-polyol (b5) dans le composant polyol B peut atteindre 40 parties en poids.

8. Adhésifs thermofusibles réactifs en polyuréthanne suivant une ou plusieurs des revendications précédentes, **caractérisés en ce que** le rapport de A à B est choisi de sorte que le rapport molaire de NCO à OH se situe dans l'intervalle allant de 1,3 à 3,0.

9. Procédé de préparation d'adhésifs thermofusibles réactifs en polyuréthanne suivant la revendication 1, **caractérisé en ce que** les polyols B liquides sont mélangés à un excès de polyisocyanate A et que le mélange homogène est transvasé ou le mélange est agité jusqu'à obtention d'une valeur NCO constante, puis transvasé.

10. Utilisation des adhésifs thermofusibles réactifs en polyuréthanne suivant l'une des revendications 1 à 8, comme colle.
